# EUROPEAN PATENT APPLICATION

(11) **EP 2 573 683 A1**
(43) Date of publication of application: **27.03.2013**
(21) Application number: 10851762.4
(22) Date of filing: 20.05.2010
(51) Int. Cl.: G06F 15/78

(54) **DATA PROCESSOR AND ELECTRONIC CONTROL UNIT**

(71) Applicant: Renesas Electronics Corporation, Kawasaki-shi, Kanagawa 211-8668 (JP)
(72) Inventor: FURUYA, Toshiaki, Kawasaki-shi, Kanagawa 211-8668 (JP); NAKASHIMA, Kenichi, Kawasaki-shi, Kanagawa 211-8668 (JP); HIRATA, Susumu, Kawasaki-shi, Kanagawa 211-8668 (JP)
(74) Representative: Calderbank, Thomas Roger
(86) International application number: PCT/JP2010/058549
(87) International publication number: WO 2011/145198

(57) **Abstract**

A data processor (1) includes a plurality of oscillation circuits (13 and 24) that individually generate a first clock signal (HCK) and a second clock signal (LCK) with a lower frequency, in which a CPU (10) performs data processing in synchronization with the oscillation output of an oscillation circuit selected by a clock switching circuit (22). In a state where the low power consumption mode is set, the data processor stops the first clock signal and maintains the oscillation of the second clock signal, selects whether or not to initiate the oscillation of the first clock signal in response to the trigger to cancel the low power consumption mode, and initiates the oscillation of the first clock signal without the CPU interrupt process which is enabled by the cancellation of the low power consumption mode. During the time period of the power-on reset for returning from a power-off state, oscillation of the first clock signal is initiated on the condition that the externally provided power-on trigger is a predetermined trigger, and the oscillation of the first clock signal is inhibited in case that the trigger is a trigger other than the predetermined trigger.

## Description

### TECHNICAL FIELD

The present invention relates to a low power consumption technique for clock oscillation in a data processor and an electronic control unit using the same. For example, the invention relates to an electronic control unit used to perform electronic control of a vehicle.

### BACKGROUND ART

PTL 1 is about the low power consumption of the micro computer and describes a technique by which in case that each trigger to cancel a plurality of kinds of standby modes occurs, a standby mode controller for canceling a standby mode in accordance therewith causes a clock selector to select a clock signal in response to the trigger to cancel the standby mode and uses the selected clock signal as a synchronization clock signal after the standby cancellation so as to be able to select a clock frequency necessary for processing after the standby cancellation.

PTL 2 describes a technique that supplies a low-speed clock to a CPU in the standby mode, activates a high-speed clock and starts a count operation in response to the interrupt input, switches a synchronization clock signal of the CPU from a low-speed clock signal to a high-speed clock signal in case that the count value reaches a predetermined value, and starts an interrupt process, so as to start the interrupt process synchronized with the high-speed clock in case of returning from the standby mode to the normal mode.
[patent document 1] JP-A-10-49248
[patent document 2] JP-A-2005-44136

### DISCLOSURE OF THE INVENTION

### PROBLEMS THAT THE INVENTION IS TO SOLVE

The present inventors study for reduction in power consumption in a case of performing data processing on the data processor by periodically repeating setting and cancellation of the standby mode. The processes, which are performed in case of canceling the standby mode, not only include processes which have to be performed in synchronization with the high-speed clock signal like the communication process and the AD-conversion process, but also processes which have only to be performed in synchronization with the low-speed clock like the process of periodically clearing the timer count value for the watchdog timer and the seconds-count update process for the clock timer circuit. Thus, the present inventors study for optimization of both power consumption in the standby state and power consumption after the standby cancellation through control of the clock signal. In a similar manner as Patent Literature 1, in the standby state, high-speed-locked oscillation is maintained, and the clock signal can be selected in response to the interrupt trigger of the standby cancellation. However, with only such a configuration, the oscillation of the high-speed clock is performed all the time, and thus it is conceivable that the effect thereof is not enough to reduce power consumption. Further, in the case of Patent Literature 2, the oscillation of the high-speed clock is initiated in response to the input of the interrupt signal for canceling the standby mode. Hence, this configuration is able to reduce power consumption in that the oscillation of the high-speed clock is not performed all the time. However, if there is the interrupt request, the oscillation of the high-speed clock is initiated every time. Thus, under control for switching the system clock to the high-speed clock, in the case of the above-mentioned process which has only to be performed in synchronization with the low-speed clock, electric power is wasted. As described above, it is discovered that there is a necessity for clock control to achieve low power consumption in both power consumption in the low power consumption mode and power consumption in the cancellation state of the low power consumption mode.

Likewise, also in the low power consumption state such as the deep standby for achieving low power consumption by selectively cutting off the power supply of the data processor, focusing on the process which is performed after the return from the deep standby, it is preferable to determine whether or not the oscillation of the high-speed clock is initiated. As described above, it is discovered that there is a necessity for clock control capable of performing data processing with a frequency which is just enough in accordance with the process performed after power on.

It is an object of the present invention to provide a data processor and an electronic control unit capable of contributing to low power consumption even in a case where the low power consumption state is shifted to an operable state.

The above-mentioned object, other objects, and newly proposed aspects of the present invention will be described in the present specification with reference to the accompanying drawings.

### MEANS FOR SOLVING THE PROBLEMS

Brief description of the representative embodiments of the invention disclosed in the present application is as follows.

That is, a data processor includes a plurality of oscillation circuits that individually generate a first clock signal and a second clock signal with a lower frequency than that, in which a CPU performs data processing in synchronization with the oscillation output of an oscillation circuit selected by a clock switching circuit. In a state where the low power consumption mode is set, the data processor stops the first clock signal and maintains the oscillation of the second clock signal, selects whether or not to initiate the oscillation of the first clock signal in response to the trigger to cancel the low power consumption mode, and initiates the oscillation of the first clock signal without the CPU interrupt process which is enabled by the cancellation of low power consumption mode.

If the trigger to cancel the low power consumption mode initiates the oscillation of the first clock signal, the CPU performs the interrupt process in synchronization with the second clock signal until the oscillation of the first clock signal is stabilized, and continuously performs the interrupt process in synchronization with the first clock signal after the oscillation of the first clock signal is stabilized. In contrast, if the trigger to cancel the power consumption mode does not initiate the oscillation of the first clock signal, the CPU performs the interrupt process in synchronization with the second clock signal.

Further, during the time period of the power-on reset for returning from a power-off state, oscillation of the first clock signal is initiated on the condition that the externally provided power-on trigger is a predetermined trigger, and the oscillation of the first clock signal is inhibited in case that the trigger is a trigger other than the predetermined trigger.

If the power-on trigger is the predetermined trigger, it is possible to perform a process corresponding to the trigger at a high speed through a power-on reset operation on the basis of the first clock signal with a higher frequency. In contrast, if the power-on trigger is other than the predetermined trigger, it is possible to perform the process corresponding to the acceptance through the power-on reset operation on the basis of the second clock with a lower frequency.

With such a configuration, in the state where the low power consumption mode is set, the oscillation of the first clock signal is stopped, and thus in this respect, the low power consumption is achieved. Further, in case that the low power consumption mode is canceled, the first clock signal is generated only if necessary in response to the cancellation trigger. Hence, the CPU synchronously operates with the frequency which is just enough for the process performed after the cancellation of the low power consumption mode. In this respect, it is also possible to achieve low power consumption, and it is possible to complete the process corresponding to the cancellation trigger at an appropriate time. Furthermore, at that time, the oscillation of the first clock signal is initiated without the CPU interrupt process performed by the occurrence of the cancellation trigger. Hence, compared with the case where the oscillation is controlled to be initiated through the CPU interrupt process, it is possible to reduce the latency time from the instruction to cancel the low power consumption mode to stabilize the oscillation. In this respect, the process is completed at an appropriate time, and low power consumption is achieved. Moreover, at the time of power-on returning from the power-off state, the first clock signal is also generated only if necessary in response to the power-on trigger. Hence, the CPU synchronously operates with the frequency which is just enough for the process performed after the power-on operation. In this respect, it is also possible to achieve low power consumption, and to execute the process at an appropriate time.

### EFFECTS OF THE INVENTION

Brief description of the effects obtained by the representative embodiments of the invention disclosed in the present application is as follows.

That is, even in the case of shifting from the low power consumption state to the operable state, it is possible to contribute to low power consumption.

### BRIEF DESCRIPTION OF THE DRAWINGS

Fig. 1 is a block diagram illustrating an example of an electronic control unit and a data processor according to an embodiment of the present invention.
Fig. 2 is a block diagram illustrating a specific example of a low power consumption mode control circuit.
Fig. 3 is a block diagram illustrating a specific example of a CAN control module.
Fig. 4 is a block diagram illustrating a specific example of an interrupt trigger determination circuit.
Fig. 5 is an operation timing chart in a case where oscillation of the high-speed clock signal is initiated during a power-on reset time period.
Fig. 6 is an operation timing chart in a case where the oscillation of the high-speed clock is not performed during the power-on reset time period.
Fig. 7 is a flowchart illustrating the whole of a control sequence of returning from the standby mode.
Fig. 8 is a timing chart illustrating an example of operation timing in a case where the CPU returns from the standby state and performs a low-speed operation and operation timing in a case where the CPU returns from the standby state and performs a high-speed operation.
Fig. 9 is a timing chart illustrating an example of operation timing according to a comparative example in which an instruction to generate the oscillation of the high-speed clock is issued by an interrupt without using a trigger determination circuit in case that the CPU returns from the standby state and performs the high-speed operation.
Fig. 10A is an explanatory diagram illustrating an example of an interrupt process program in a case where the CPU performs the low-speed operation.
Fig. 10B is an explanatory diagram illustrating an example of an interrupt process program in a case where the CPU performs the high-speed operation.

### EXPLANATION OF REFERENCE NUMERALS

- 6:: NETWORK BUS (CANBUS)
- 5:: CAN CONTROL MODULE (CANTRNSCV)
- 1:: DATA PROCESSOR (MCU)
- 2, 3:: ACTUATOR (ACTATR)
- 4:: POWER SUPPLY CIRCUIT (PWSPLY)
- PWEN:: POWER ENABLE SIGNAL
- VCC:: POWER SUPPLY VOLTAGE
- RES:: RESET SIGNAL
- RTNF1, RTNF2:: RETURN TRIGGER SIGNAL
- 10:: CPU
- 11:: PROGRAMMABLE ROM (PROM)
- 12:: RAM
- 14:: COMMUNICATION INTERFACE CIRCUIT (COMMIF)
- 15:: ANALOG DIGITAL CONVERSION CIRCUIT (ADC)
- 13:: OSCILLATION CIRCUIT (HOCO)
- HCK:: HIGH-SPEED CLOCK SIGNAL
- LCK:: LOW-SPEED CLOCK SIGNAL
- 24:: OSCILLATION CIRCUIT (LOCO)
- 22:: CLOCK SWITCHING CIRCUIT
- SCK:: SYSTEM CLOCK SIGNAL
- 25:: GENERAL-PURPOSE TIMER CIRCUIT (TMR)
- 27:: CLOCK TIMER CIRCUIT (RTTMR)
- 29:: WATCHDOG TIMER (WDTMR)
- 20:: INTERRUPT CONTROL CIRCUIT (INTCL)
- 21:: INTERRUPT TRIGGER DETERMINATION CIRCUIT (TCTDSC)
- 23:: SYSTEM CONTROLLER (SYSCNT)
- 26:: OSCILLATION STABILIZATION LATENCY TIMER CIRCUIT (STBTMR)
- IRQ:: INTERRUPT SIGNAL
- 31:: MODE REGISTER
- 33:: RESET CONTROL CIRCUIT
- 32:: STANDBY MODE FLAG
- res:: INTERNAL RESET SIGNAL
- 34:: LOW VOLTAGE DETECTOR (LVD)
- 50:: TRANSCEIVER (TRNSWCV)
- 51:: CONTROL CIRCUIT (CONT)
- 52:: ID DETERMINATION CIRCUIT (IDDSC)
- 53:: TIMER CIRCUIT (TMR)
- 54:: TRIGGER DETERMINATION CIRCUIT (FCTDSC)
- 60:: CONTROL SIGNAL
- CANwku:: WAKE-UP INTERRUPT REQUEST SIGNAL
- INTj:: INTERNAL INTERRUPT REQUEST SIGNAL
- EXTint:: EXTERNAL INTERRUPT REQUEST SIGNAL
- WDTint:: CLEAR INTERRUPT REQUEST SIGNAL
- RTTint:: SECONDS-COUNT UPDATE INTERRUPT REQUEST SIGNAL
- 61:: DISCRIMINATION SIGNAL

### BEST MODE FOR CARRYING OUT THE INVENTION

### 1. Summary of The Embodiments

First, summary of the representative embodiments of the invention disclosed in the present application will be described. In the summary of the representative embodiments, the bracketed reference numerals and signs of the drawings simply exemplify that they are included in the concepts of components represented by them.

### A) Reduction in Power Consumption in Cancellation of Low Power Consumption Mode

### (1) <Leading Oscillation in Response to Return Trigger at the Time of Returning from Low Power Consumption State>

A data processor (1) according to a representative embodiment of the present invention includes: a first oscillation circuit (13) that generates a first clock signal (HCK) and stops oscillating in a low power consumption mode; a second oscillation circuit (24) that generates a second clock signal (LCK) with an oscillation frequency lower than the first clock signal (HCK) and does not stop oscillating in the low power consumption mode; a clock switching circuit (22) that selects and outputs the first clock signal (HCK) or the second clock signal (LCK); first circuits (10 to 15) that stop operating in response to setting of the low power consumption mode, restart operating in response to cancellation of the low power consumption mode, and operate in synchronization with a clock signal which is output from the clock switching circuit; and second circuits (20 to 23, 24, 25, 27, 29, and 30) that are able to operate in both states of the setting and the cancellation of the low power consumption mode. A CPU (10) is provided as one of the first circuit. A low power consumption mode control circuit (30) is provided as one of the second circuit. The low power consumption mode control circuit cancels the low power consumption mode in response to receiving an interrupt request (CANwku, INTj, EXTint, WDTint, or RTTint) in the low power consumption mode, and instructs the first oscillation circuit to initiate the oscillation without an interrupt process of the CPU which responds to the corresponding interrupt request particularly in case that the interrupt request to cancel the low power consumption mode is a predetermined interrupt request (CANwku, INTj, or EXTint) (61).

With such a configuration, in the state where the low power consumption mode is set, the oscillation of the first clock signal is stopped, and thus in this respect, the low power consumption is achieved. Further, in case that the low power consumption mode is canceled, the first clock signal is generated only if necessary in response to the cancellation trigger. Hence, the CPU synchronously operates with the frequency which is just enough for the process performed after the cancellation of the low power consumption mode. In this respect, it is also possible to achieve low power consumption, and it is possible to complete the process corresponding to the cancellation trigger at an appropriate time. Furthermore, at that time, the oscillation of the first clock signal is initiated without the CPU interrupt process performed by the occurrence of the cancellation trigger. Hence, compared with the case where the oscillation is controlled to be initiated through the CPU interrupt process, it is possible to reduce the latency time from the instruction to cancel the low power consumption mode to stabilize the oscillation. In this respect, the process is completed at an appropriate time, and low power consumption is achieved.

### (2) <Interrupt Control Circuit and Trigger Determination Circuit>

In the data processor of claim 1, the low power consumption mode control circuit has an interrupt control circuit (20) and a trigger determination circuit (21). The interrupt control circuit issues an interrupt instruction to the CPU in response to receiving the interrupt request, and issues an instruction to cancel the low power consumption state in response to receiving the interrupt request in the low power consumption state. The trigger determination circuit outputs a control signal (61) for instructing the first oscillation circuit to initiate the oscillation in case that it is determined that the interrupt request received by the interrupt control circuit is the predetermined interrupt request.

The interrupt control circuit performs control to receive the interrupt request on the basis of the interrupt priority level and the like of the interrupt request. The trigger determination circuit determines whether or not the interrupt request received by the interrupt control circuit is the predetermined interrupt request in parallel with the control performed by the interrupt control circuit.

### (3) <Low Power Consumption Mode Flag>

In the data processor of claim 2, the low power consumption mode control circuit further has a low power consumption mode flag (32) for determining the setting and the cancellation of the low power consumption mode, the data processor achieves the low power consumption state by setting the low power consumption mode flag, and the low power consumption state of the data processor is canceled by resetting the set low power consumption mode flag.

By determining the low power consumption mode flag state, it becomes easy to perform control to set and cancel the low power consumption mode.

### (4) <Timer of Clock Oscillation Stabilization>

In the data processor of claim 2 or 3, the low power consumption mode control circuit initiates a timer count operation in synchronization with the instruction of the oscillation of the first oscillation circuit (61), and further has a timer circuit (26) that outputs a time-out signal in case that a time-out count value is reached. The output of the clock switching circuit is controlled to be switched from the second clock signal to the first clock signal in response to the time-out signal.

By selecting the time-out count value in accordance with the oscillation characteristics of the first oscillation circuit depending on the employed oscillator and the like, it is possible to set the clock oscillation stabilization latency time to a variable.

### (5) <Time-Out Count Register>

In the data processor of claim 4, the timer circuit has a time-out count register (36) in which the time-out count value is set by the CPU.

It becomes extremely easy to set the time-out count value to a variable.

### (6) <Clock Switching by CPU>

In the data processor of claim 4 or 5, the interrupt control circuit inputs the time-out signal (INTj) as one of the interrupt requests. The CPU controls the output of the clock switching circuit so as to switch from the second clock signal to the first clock signal through the interrupt process which is initiated by inputting an interrupt instruction based on the time-out signal from the interrupt control circuit.

It is possible to easily switch the output of the clock switching circuit through the interrupt process.

### (7) <Predetermined Interrupt Request to Cancel Low Power Consumption Mode>

The data processor of any one of claims 1 to 6 further includes a communication interface circuit (14) that communicates with external as the first circuit. The predetermined interrupt request to cancel the low power consumption mode is a request (CANwku) to initiate communication using the communication interface circuit.

By canceling the low power consumption mode through the wake-up interrupt of the communication function or the like, it is possible to promptly perform the communication process synchronized with the high-speed first clock signal.

### (8) <Predetermined Interrupt Request to Cancel Low Power Consumption Mode>

The data processor of claim 7 further includes an AD-conversion circuit (15) that converts an analog signal, which is input from the external, into a digital signal as the first circuit. The predetermined interrupt request to cancel the low power consumption mode is a request (INTj) to initiate an operation using the AD-conversion circuit.

By canceling the low power consumption mode by the interrupt based on the input of the analog signal from a sensor connected to the external or the wake-up interrupt of the communication function or the like, it is possible to promptly perform the communication process synchronized with the high-speed first clock signal.

### (9) <Interrupt Request Other Than Predetermined Interrupt Request to Cancel Low Power Consumption Mode>

The data processor of claim 7 or 8 further includes a watchdog timer circuit (29) as the first circuit. The interrupt request other than the predetermined interrupt request to cancel the low power consumption mode is a request (WDTint) to initialize a timer count value of the watchdog timer circuit.

Even when the standby mode is canceled by the interrupt request for the operation to initialize the timer count value of the watchdog timer, the oscillation of the high-speed first clock signal is not initiated. Hence, there is no high-speed process which wastes electric power on the operation to initialize the timer count value of the watchdog timer.

### (10) <Interrupt Request Other Than Predetermined Interrupt Request to Cancel Low Power Consumption Mode>

The data processor of any one of claims 7 to 9 further includes a clock timer circuit (27) as the first circuit. The interrupt request other than the predetermined interrupt request to cancel the low power consumption mode is a request (RTTint) to initialize a timer count value of the clock timer circuit.

Even when the standby mode is canceled by the interrupt request for the operation to initialize the timer count value of the clock timer circuit, the oscillation of the high-speed first clock signal is not initiated. Hence, there is no high-speed process which wastes electrical power on the operation to initialize the timer count value of the clock timer circuit.

### B) Reduction in Power Consumption in Each Cancellation of Low Power Consumption Mode and Power-On Reset

### (11) <Selection of Oscillation of High-Speed Clock Before Power-On Reset Cancellation>

The data processor of claim 1 further includes: a trigger terminal that is supplied with a trigger signal (RTNF1, RTNF2) which indicates a power-on reset trigger from the external of the data processor; and a reset control circuit that serves as one of the second circuit and performs reset control (33) of the data processor. The reset control circuit instructs the second oscillation circuit to initiate the oscillation during a time period of the power-on reset, and instructs the first oscillation circuit to initiate the oscillation at predetermined timing on a condition that the trigger terminal state is a specific state (60).

At the time of power-on, the first clock signal is also generated only if necessary in response to the power-on trigger. Hence, the CPU synchronously operates with the frequency which is just enough for the process performed after the power-on reset cancellation. In this respect, it is also possible to achieve low power consumption.

### (12) <Generation of Timing of Initiating High-Speed Clock Oscillation Using LVD>

In the data processor of claim 11, the reset control circuit has a low voltage detector (34), and instructs the first oscillation circuit to initiate the oscillation in synchronization with timing at which the low voltage detector detects a rising edge with a predetermined level of a power supply voltage during the time period of the power-on reset, in case that the trigger terminal state is the specific state (60).

By using detection of the rising edge with the predetermined level of the power supply voltage by the low voltage detector, even in the power-on reset time period, it is possible to reliably instruct the first oscillation circuit to initiate the oscillation.

### (13) <Clock Switching Control After Power-On Reset Cancellation>

In the data processor of claim 12, after cancellation of the power-on reset, the output of the clock switching circuit is controlled to be switched from the second clock signal to the first clock signal.

After the cancellation of the power-on reset, it is possible to perform the clock switching control through the program process of the CPU.

### (14) <External Reset Terminal>

The data processor of claim 13 further includes an external reset terminal (RES) that issues an instruction to cancel the power-on reset.

By performing the reset cancellation in consideration of passage of the latency time of the clock oscillation stabilization corresponding to oscillation characteristics of the first oscillation circuit, after the cancellation, it is possible to perform the high-speed operation by promptly performing the clock switching.

### C) Reduction in Power Consumption in Cancellation of Power-On Reset

### (15) <Selection of Oscillation of High-Speed Clock Before Power-On Reset Cancellation>

A data processor according to another embodiment of the present invention includes: a first oscillation circuit that generates a first clock signal and stops oscillation in a low power consumption mode by using an oscillator; a second oscillation circuit that generates a second clock signal with an oscillation frequency lower than the first clock signal by using an on-chip oscillator circuit and does not stop oscillation in the low power consumption mode; a clock switching circuit that selects and outputs the first clock signal or the second clock signal; a CPU that operates in synchronization with the clock signal which is output from the clock switching circuit; a trigger terminal that serves as an external interface terminal which is supplied with a trigger signal indicating a trigger of power-on reset from external; and a reset control circuit that performs reset control of the data processor. The reset control circuit instructs the second oscillation circuit to initiate the oscillation during a time period of the power-on reset, and instructs the first oscillation circuit to initiate the oscillation at predetermined timing on a condition that the trigger terminal state is a specific state.

At the time of power on, the first clock signal is generated only if necessary in response to the power-on trigger. Hence, the CPU synchronously operates with the frequency which is just enough for the process performed after the power-on reset cancellation. In this respect, it is possible to achieve low power consumption.

### (16) <Generation of Timing of Initiating High-Speed Clock Oscillation Using LVD>

In the data processor of claim 15, the reset control circuit has a low voltage detector, and instructs the first oscillation circuit to initiate the oscillation in synchronization with timing at which the low voltage detector detects a rising edge at a predetermined level of a power supply voltage during the time period of the power-on reset, in case that the trigger terminal state is the specific state.

By using detection of the rising edge with the predetermined level of the power supply voltage by the low voltage detector, even in the power-on reset time period, it is possible to reliably instruct the first oscillation circuit to initiate the oscillation.

### (17) <Clock Switching Control After Power-On Reset Cancellation>

In the data processor of claim 16, after cancellation of the power-on reset, the output of the clock switching circuit is controlled to be switched from the second clock signal to the first clock signal.

After the cancellation of the power-on reset, it is possible to perform the clock switching control through the program process of the CPU.

### (18) <External Reset Terminal>

The data processor of claim 17 further includes an external reset terminal that issues an instruction to cancel the power-on reset.

By performing the reset cancellation in consideration of passage of the latency time of the clock oscillation stabilization corresponding to oscillation characteristics of the first oscillation circuit, after the cancel, it is possible to perform the high-speed operation by promptly performing the clock switching.

### D) Return from Deep Standby State of Electronic Control Unit (19) <Power-On Reset of Electronic Control Unit>

An electronic control unit according to another embodiment of the present invention includes: a control module (5) that is connected to a communication network; a data processor that is connected to the communication module, has a plurality of oscillation circuits (13 and 24) individually generating a first clock signal (HCK) and a second clock signal (LCK) of which a frequency is lower than that of the first clock signal and with which it is easy to control oscillation stabilization, and has a CPU (10) operating in synchronization with an oscillation output of the oscillation circuit which is selected by a clock switching circuit; actuators (2 and 3) that are controlled by the data processor; and a power supply circuit (4) that supplies a power supply voltage to the data processor. The control module controls supply of the power supply voltage from the power supply circuit to the data processor and cutoff of the power supply voltage, and performs control to output a signal (RTNF1 or RTNF2), which indicates a trigger thereof, to the data processor in case of switching from the state where the power supply voltage is cut off to the state where the voltage is supplied. The data processor initiates oscillation of the second clock signal during a time period of the power-on reset, and initiates the oscillation of the first clock signal at predetermined timing on a condition that the trigger supplied from the control module is a predetermined trigger (60).

At the time of power on, the first clock signal is generated only if necessary in response to the power-on trigger. Hence, the CPU synchronously operates with the frequency which is just enough for the process performed after the power-on reset cancellation. In this respect, it is possible to achieve low power consumption.

### (20) <Generation of Timing of Initiating High-Speed Clock Oscillation Using LVD>

In the electronic control unit of claim 19, the data processor has a low voltage detector, and initiates the oscillation of the first clock signal in synchronization with timing at which the low voltage detector detects a rising edge at a predetermined level of a power supply voltage during the time period of the power-on reset, in case that the trigger supplied from the control module is the predetermined trigger during the time period of the power-on reset.

By using detection of the rising edge with the predetermined level of the power supply voltage by the low voltage detector, even in the power-on reset time period, it is possible to reliably instruct the first oscillation circuit to initiate the oscillation.

### (21) <Clock Switching Control After Power-On Reset Cancellation>

In the electronic control unit of claim 20, after cancellation of the power-on reset, the output of the clock switching circuit is controlled to be switched from the second clock signal to the first clock signal.

After the cancellation of the power-on reset, it is possible to perform the clock switching control through the program process of the CPU operating in synchronization with the second clock signal.

### (22) <Instruction of Power-On Reset Cancellation>

In the electronic control unit of claim 21, the control module instructs the data processor to cancel the power-on reset.

The control module performs the reset cancellation in consideration of passage of the latency time of the clock oscillation stabilization corresponding to oscillation characteristics of the first clock signal, whereby after the reset cancellation, the data processor is able to perform the high-speed operation by promptly performing the clock switching.

### (23) <Timer for Determining Power-on Reset Cancellation Timing>

In the electronic control unit of claim 22, the control module further has a timer circuit for determining cancellation timing of the power-on reset.

In consideration of passage of the latency time for stabilizing the oscillation of the first clock signal, it is possible to easily control the cancellation timing of the power-on reset.

### E) Return from Standby State of Electronic Control Unit (24) <Standby Cancellation of Electronic Control Unit>

In the electronic control unit of claim 19, the data processor has a first circuit that stops operating in response to setting of the low power consumption mode, restarts operating in response to cancellation of the low power consumption mode and operates in synchronization with a clock signal which is output from the clock switching circuit, and a second circuit that is able to operate in both states of the setting and the cancellation of the low power consumption mode. The CPU is one circuit of the first circuit. A low power consumption mode control circuit is provided as one of the second circuit. The low power consumption mode control circuit cancels the low power consumption mode in response to receiving an interrupt request in the low power consumption mode, and issues an instruction to initiate the oscillation of the first clock signal without an interrupt process of the CPU which responds to the corresponding interrupt request particularly in case that the interrupt request to cancel the low power consumption mode is a predetermined interrupt request.

With such a configuration, in the state where the low power consumption mode is set, the oscillation of the first clock signal is stopped, and thus in this respect, the low power consumption is achieved. Further, in case that the low power consumption mode is canceled, the first clock signal is generated only if necessary in response to the cancellation trigger. Hence, the CPU synchronously operates with the frequency which is just enough for the process performed after the cancellation of the low power consumption mode. In this respect, it is also possible to achieve low power consumption. Furthermore, at that time, the oscillation of the first clock signal is initiated without the CPU interrupt process performed by the occurrence of the cancellation trigger. Hence, compared with the case where the oscillation is controlled to be initiated through the CPU interrupt process, it is possible to reduce the latency time from the instruction to cancel the low power consumption mode to stabilization of the oscillation. In this respect, low power consumption is also achieved.

### (25) <Interrupt Control Circuit And Trigger Determination Circuit>

In the electronic control unit of claim 24, the low power consumption mode control circuit has an interrupt control circuit and a trigger determination circuit. The interrupt control circuit issues an interrupt instruction to the CPU in response to receiving the interrupt request, and issues an instruction to cancel a low power consumption state in response to receiving the interrupt request in the low power consumption state. In case of determining that the interrupt request received by the interrupt control circuit is the predetermined interrupt request, the trigger determination circuit outputs a control signal for issuing the instruction to initiate the oscillation of the first clock signal.

The interrupt control circuit performs control to receive the interrupt request on the basis of the interrupt priority level and the like of the interrupt request. The trigger determination circuit determines whether or not the interrupt request received by the interrupt control circuit is the predetermined interrupt request in conjunction with the control performed by the interrupt control circuit.

### (26) <Low Power Consumption Mode Flag>

In the electronic control unit of claim 25, the low power consumption mode control circuit further has a low power consumption mode flag for determining the setting and the cancellation of the low power consumption mode, the data processor achieves the low power consumption state in case that the low power consumption mode flag is set, and the low power consumption state of the data processor is canceled in case that the set low power consumption mode flag is reset.

By determining the low power consumption mode flag state, it becomes easy to perform control to set and cancel the low power consumption mode.

### (27) <Timer of Clock Oscillation Stabilization>

In the electronic control unit of claim 25 or 26, the low power consumption mode control circuit initiates a timer count operation in synchronization with the instruction to initiate the oscillation of the first clock signal, and further has a timer circuit that outputs a time-out signal in case that a time-out count value is reached. The output of the clock switching circuit is controlled to be switched from the second clock signal to the first clock signal in response to the time-out signal.

By selecting the time-out count value in accordance with the oscillation characteristics of the first oscillation circuit depending on the employed oscillator and the like, it is possible to set the clock oscillation stabilization latency time to a variable.

### (28) <Time-Out Count Register>

In the electronic control unit of claim 27, the timer circuit has a time-out count register in which the time-out count value is set by the CPU.

It becomes extremely easy to set the time-out count value to a variable.

### (29) <Clock Switching by CPU>

In the electronic control unit of claim 27 or 28, the interrupt control circuit inputs the time-out signal as one of the interrupt requests. The CPU controls the output of the clock switching circuit so as to switch from the second clock signal to the first clock signal through the interrupt process which is initiated by inputting an interrupt instruction based on the time-out signal from the interrupt control circuit.

It is possible to easily switch the output of the clock switching circuit through the interrupt process.

### 2. Further Detailed Description of The Embodiments

The embodiments will be described in further detail. In addition, in all the drawings for describing the embodiments for carrying out the invention, the elements having the same function will be represented by the same reference numerals and signs, and repeated description thereof will be omitted.

### «Data Processor and Electronic Control Unit»

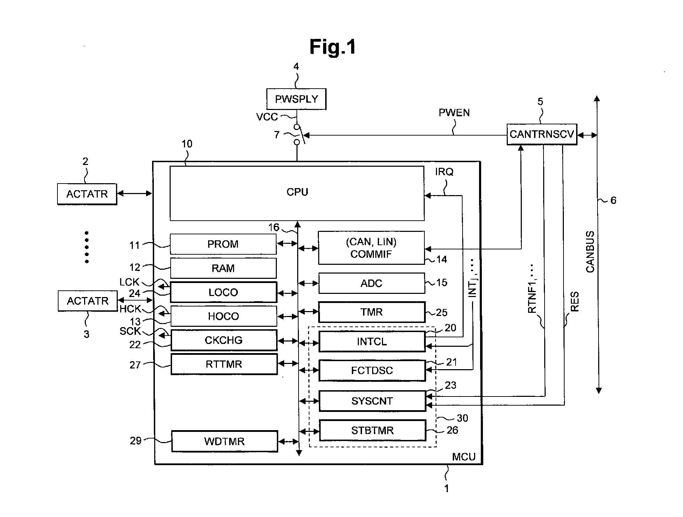

Fig. 1 shows an example of the electronic control unit according to an embodiment of the present invention. The electronic control unit shown in the same drawing is, for example, one of ECUs (Electronic Control Unit) of vehicles, and a CAN (Controller Area Network) which is one of on-vehicle LANs is employed as an example of the network connected thereto.

A network bus (CANBUS) 6 is connected to the data processor (MCU) 1 through a CAN control module (CANTRNSCV) 5 as the network control module, and the data processor 1 is connected to the actuators (ACTATR) 2 and 3 subjected to the control thereof. The CAN control module 5 is not limited to have a transceiver function, but may have a receiver function in accordance with the function of the ECU.

The CAN control module 5 performs data transfer control between the network bus 6 and the data processor 1, performs control to supply and cut off the power supply from the power supply circuit (PWSPLY) 4 to the data processor 1, and performs reset control at the time of supplying power again and control of trigger notification that the power supply is started again. That is, the CAN control module 5 deactivates a power enable signal PWEN in response to the instruction to cut off the power supply so as to perform control to turn off a power switch 7, thereby stopping supply of the power supply voltage VCC from the power supply circuit 4 to the data processor 1. The instruction to cut off the power supply is not particularly limited, but is generated by execution of a predetermined command of the data processor 1. For convenience of description, the power-off state described herein is referred to as a deep standby state. The return from the deep standby state is performed in case that the CAN control module 5 discriminates the communication request from the network bus 6, or in case that the time-out determined by the internal timer of the CAN control module 5 occurs. For example, in case that the CAN control module 5 monitors the condition of the network bus 6 and discriminates the communication request in which the module itself is designated as a communication target, the module activates the power enable signal PWEN so as to perform control to turn on the power switch 7, and outputs the reset signal RES to data processor 1 so as to issue instruction to perform the power-on reset. Further, in case that a predetermined event such as time-out occurs in the CAN control module 5, the power enable signal PWEN is activated such that the power switch 7 is controlled to be turned on, and the reset signal RES is output to the data processor 1 such that the instruction of the power-on reset is issued. In case that the CAN control module 5 issues an instruction of the power-on reset on the basis of the reset signal RES, the return trigger from the deep standby state is notified to the data processor 1 by, for example, the 2-bit return trigger signal RTNF1 or RTNF2. The data processor 1 discriminates whether or not the return trigger signal RTNF1 or RTNF2 indicates a specific return trigger, issues the instruction of the oscillation of the high-speed clock signal at predetermined timing on a condition that that is the specific trigger, and inhibits the instruction of the oscillation of the high-speed clock signal if that is other than the predetermined trigger. Thereby, it is possible to cause the data processor 1 to operate in synchronization with the frequency which is just enough for the process performed after the cancellation of the power-on reset. Detailed description will be given later.

The data processor 1 is not particularly limited, but is formed by using a technique of manufacturing a complementary MOS integrated circuit on one semiconductor substrate like monocrystalline silicon. The data processor 1 is not particularly limited, but includes: a CPU (Central Processing Unit) 10 that decodes and executes a fetched command; a programmable ROM (PROM) 11 that is similar to a flash memory in which control data and programs executed by the CPU 10 are rewritable and retained; a RAM (Random Access Memory) 12 that is used in a work area and the like of the CPU 10; the communication interface circuit (COMMIF) 14 that is connected to the CAN control module 5 and performs input/output control of communication packets in accordance with protocols and the like of the CAN; an analog digital conversion circuit (ADC) 15 that converts analog signals, which are supplied from the external of the data processor 1, for example, the actuators 2 and 3 and the like, into digital signals; and an oscillation circuit (HOCO) 13 that generates the high-speed clock signal HCK as the first clock signal used in the high-speed data processing. The oscillation circuit 13 is constituted by a circuit that generates the high-speed clock signal HCK necessary for a PLL circuit and the like by using the resonance, which is caused by an oscillator such as a crystal oscillator connected to the external of the data processor 1, as source oscillation. Consequently, in order to stabilize the oscillation of the oscillation circuit 13, a predetermined operation voltage is necessary, and the lead-in control of the PLL circuit is more complicated than the control of the oscillation stabilization of the oscillation circuit such as an on-chip oscillator. Operations of such circuits 10 to 15 are stopped by the setting of the low power consumption mode, and the circuits are regarded as examples of the first circuit which can be operated by the cancellation of the low power consumption mode. The low power consumption mode described herein is a standby mode that is set, for example, by the standby command executed by the CPU 10 and in accordance with a mode terminal condition. In case that the standby mode is set, the supply of the operation power supply to the circuits 10 to 15 is stopped, and the oscillation of the oscillation circuit (HOCO) 13 is stopped. The standby mode is canceled by, for example, the interrupt or the reset instruction.

The data processor 1 further has an oscillation circuit (LOCO) 24 that generates the low-speed clock signal LCK as the second clock signal used in low-speed data processing. The oscillation circuit 24 does not need external elements such as the oscillator, and is constituted by the on-chip oscillator by which it is easier to perform control to stabilize the oscillation than the oscillation circuit 13 of the high-speed clock signal HCK. The output of the oscillation circuit 13 and the output of the oscillation circuit 24 are selected by the clock switching circuit 22, and the selected clock signal is used as a synchronization clock signal (operation reference clock signal) of the data processor as the system clock signal SCK. In the standby mode, the oscillation of the oscillation circuit 24 is not stopped.

The data processor 1 has not only a general-purpose timer circuit (TMR) 25 used in the timer counter operation, but also a clock timer circuit (RTTMR) 27 and a watchdog timer (WDTMR) 29. The clock timer circuit 27 and the watchdog timer 29 have comparatively long time-out periods, and are thus circuits with characteristics capable of obtaining the performance necessary and sufficient for a timer operation based on the low-speed clock signal LCK. The general-purpose timer circuit 25 has a short time-out period, and thus only the operation synchronized with the low-speed clock is insufficient therefor.

The data processor 1 further includes: an interrupt control circuit (INTCL) 20; an interrupt trigger determination circuit (TCTDSC) 21; a system controller (SYSCNT) 23; and an oscillation stabilization latency timer circuit (STBTMR) 26.

The interrupt control circuit 20 inputs the interrupt request signal typified by INTj, and performs control to receive the interrupt request on the basis of the interrupt priority level of the interrupt request. The interrupt control circuit 20, which receives the interrupt request, outputs an interrupt signal IRQ to the CPU 10. The CPU 10, which is subjected to the interrupt instruction by the interrupt signal IRQ, completes command execution in the process thereof, then performs a necessary evacuation process, thereafter fetches a vector corresponding to the received interrupt request, and executes an interrupt process program instructed in accordance therewith. By executing the interrupt process program, the data processing, which responds to the corresponding interrupt request, is performed, and after the process is completed, the return process is performed, thereby returning to the process immediately before shifting to the interrupt process.

The interrupt trigger determination circuit 21 discriminates in advance whether or not the interrupt request received by the interrupt control circuit 20 is the predetermined interrupt request in parallel with the interrupt control performed by the interrupt control circuit 20, and instructs the oscillation circuit 13 to initiate the oscillation of the high-speed clock signal HCK if the interrupt request received by the interrupt control circuit is the predetermined interrupt request. The oscillation instruction is issued without performing the interrupt process, which is executed by the CPU 10, in response to the corresponding interrupt request.

The oscillation stabilization latency timer circuit 26 is used in a timer operation for waiting for stabilization of the oscillation which is initiated by the oscillation circuit 13 under the control of the interrupt trigger determination circuit 21.

The system controller 23 is used in the mode control and the reset control of the data processor 1. In the reset control performed by the system controller 23, the internal circuit of the data processor is initialized during the reset instruction time period, and as part thereof, the instruction to initiate the oscillation of the oscillation circuit 24 of the low-speed clock signal LCK is issued. However, as described above, the oscillation initiation of the high-speed clock signal HCK satisfies a predetermined condition, and the oscillation instruction is issued first. The setting and the cancellation of the standby control and the reset control at the time of returning from the deep standby state will be described later in detail.

The circuits 20 to 23, 25, 27, and 29 are examples of the second circuit which is operable in, for example, both states of the setting and the cancellation of the standby mode. In the standby mode, the clock synchronization operations of the circuits are synchronized with the low-speed clock signal LCK.

The circuits 20, 21, 23, and 26 included in the second circuit constitute a low power consumption mode control circuit 30 that controls the setting and the cancellation of the standby mode and the reset process at the time of returning from the deep standby mode. Hereinafter, the low power consumption mode control circuit 30 will be described in detail.

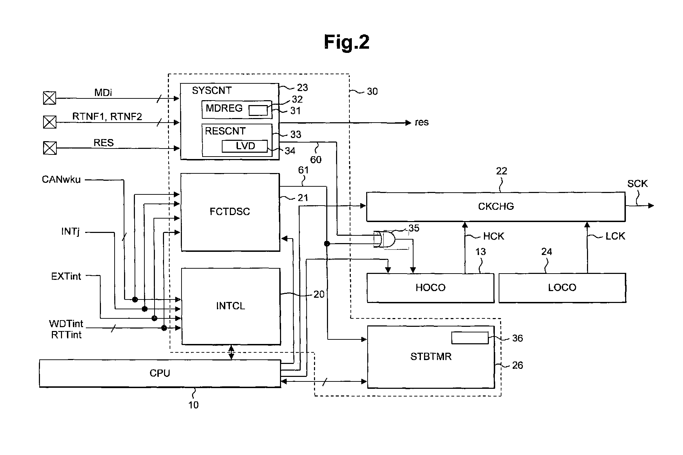

Fig. 2 shows a specific example of the low power consumption mode control circuit 30.

The system controller 23 has a mode register 31, a reset control circuit 33, and the like, and inputs the reset signal RES, the return trigger signals RTNF1 and RTNF2 from the deep standby, and a multi-bit mode signal MDi from the external terminal of the data processor 1. One bit of the mode register 31 is set as a standby mode flag 32. The data processor 1 achieves the low power consumption state by setting the standby mode flag 32, and the low power consumption state of the data processor 1 is canceled by resetting the set standby mode flag 32. In case that the standby mode flag is set by the standby command executed by the CPU 10, by using the value of the corresponding flag 32 as the control data, the supply of the power supply voltage to the first circuit such as the CPU inside the data processor 1 is stopped, and the clock switching circuit 22 selects the low-speed clock signal LCK as the system clock SCK.

### «Low Power Consumption in Cancellation of Deep Standby Mode»

The reset control circuit 33 maintains the internal reset signal res in the reset instruction state by setting the low level time period as the reset time period in case that the external reset signal RES is at the low level, and cancels the reset instruction, which is set by the reset signal res, in synchronization with the change to the high level of the external reset signal RES. The reset control circuit 33 has the low voltage detector (LVD) 34, and discriminates whether the power supply voltage is maintained at a prescribed voltage or whether or not it reaches the prescribed voltage at the time of power on. In case that the voltage detected by the low voltage detector 34 does not reach the prescribed voltage, the internal reset signal res is set in the reset instruction state. In case that the detected voltage reaches the prescribed voltage, stabilization of the power supply voltage is awaited through the timer operation of the reset control circuit 33, and then the reset instruction of the internal reset signal res is canceled. In case that the reset instruction based on the external reset signal RES and the reset control process performed by the low voltage detector 34 compete against each other, the reset instruction based on the external reset signal RES and the cancellation thereof are prioritized.

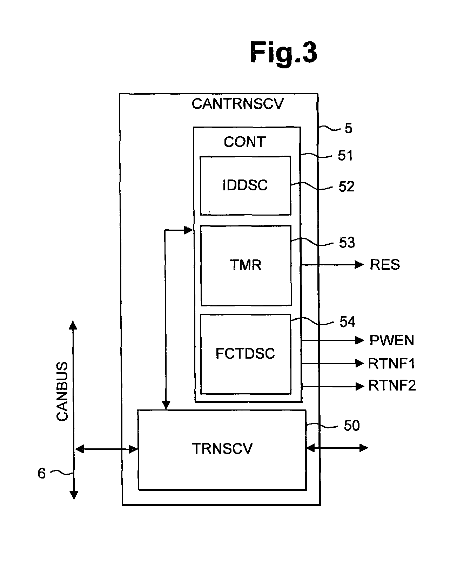

The reset control circuit 33 instructs the high-speed oscillation circuit 13 to initiate the oscillation at a predetermined timing on the condition that the states of the return trigger signals RTNF1 and RTNF2 are specific states during the power-on reset time period. The return trigger signals RTNF1 and RTNF2 depend on the trigger to cause the CAN control module 5 to cancel the deep standby mode of the data processor 1. For example, as exemplified in Fig. 3, the CAN control module 5 includes: a transceiver (TRNSWCV) 50 that transmits and receives packets in accordance with CAN protocols; and a control circuit (CONT) 51 that controls the operation of the transceiver 50. In the control circuit 51, there are circuits relating to the setting and the cancellation of the deep standby mode. An ID determination circuit (IDDSC) 52 discriminates whether or not the ID of the destination of the packet of the network bus 6 is the ID of the CAN control module 5. The timer circuit (TMR) 53 is used in a timer operation for canceling the deep standby, for example, a timer operation for obtaining the timing and the like of the operation for periodically clearing the timer count values of the timers provided in the actuators 2 and 3. In a state where the ID determination circuit 52 identifies the packet containing the own ID or the timer circuit 53 is timed out, the trigger determination circuit (FCTDSC) 54 discriminates the state, and activates the power enable signal PWEN, thereby canceling the deep standby state, and determines the complementary levels of the 2-bit return trigger signals RTNF1 and RTNF2 in response to the power-on trigger. The trigger determination circuit 54 deactivates both the return trigger signals RTNF1 and RTNF2 in a state where neither the detection of the packet containing the own ID or the time-out occurrence is discriminated, activates the return trigger signal RTNF1 if it is discriminated that the packet containing the own ID is detected, or activates the return trigger signal RTNF2 if it is discriminated that the time-out occurs.

The reset control circuit 33 activates the control signal 60 in synchronization with the timing of detecting the rising edge with the predetermined level of the power supply voltage through the low voltage detector 34 on the condition that the return trigger signal RTNF1 is active and the return trigger signal TNF2 is inactive during the power-on reset time period, thereby instructing the oscillation circuit 13 to initiate the oscillation of the high-speed clock HCK. At this stage, the power supply voltage reaches the operation guarantee level, and thus the oscillation circuit 13, which is subjected to the instruction to initiate the oscillation, is able to initiate the oscillation even when the reset instruction is not canceled. As described above, the oscillation stabilization takes long time. Thus, here, the CAN control module 5 sets the reset signal RES to the high level at the timing in which the time necessary for the oscillation stabilization is considered, thereby canceling the reset instruction. For example, the timer circuit 53 of the CAN control module 5 initiates the timer count operation on the basis of the power-on reset instruction, ensures time necessary for the stabilization of the oscillation circuit 13, and then causes the time-out, whereby the timer circuit may cancel the reset instruction in response to the time-out. As described above, during the reset instruction time period, the low-speed oscillation circuit 24 initiates oscillation, thereby promptly stabilizing the oscillation. The CPU 10 performs the cancellation of the reset, thereby controlling the clock switching circuit 22 such that it switches the system clock signal SCK from the low-speed clock signal LCK to the high-speed clock signal HCK. Thereafter, in response to the external interrupt such as the communication request or the like from the CAN control module 5, the data processor 1 performs the necessary control process in synchronization with the high-speed clock signal HCK.

In contrast, the reset control circuit 33 keeps the control signal 60 inactive in case that the return trigger signal RTNF1 is inactive and the return trigger signal TNF2 is active during the power-on reset time period, thereby not instructing the oscillation circuit 13 to perform oscillation. During the power-on reset instruction time period, the oscillation circuit 24 automatically initiates the oscillation, and the clock switching circuit 22 is initialized to a state where the low-speed clock signal LCK is selectable. In case that the reset instruction is canceled, the CPU 10 starts the data processing in synchronization with the low-speed clock signal LCK. If the current power-on reset trigger is for example the time-out of the timer circuit 53 for obtaining the timing and the like of the operation for periodically clearing the timer count values of the timers provided in the actuators 2 and 3, the CAN control module 5 outputs the external interrupt request corresponding to the current trigger to the data processor 1, and the CPU 10 shifts to the interrupt process responding to this, thereby performing a process of clearing the timer count values of the actuators 2 and 3 to the initial values.

After the deep standby state is canceled and the data processor 1 performs the predetermined process, in case that the CPU 10 requests the CAN control module 5 to set the deep standby, the supply of the power supply voltage to the data processor 1 is stopped, and the data processor 1 shifts to the deep standby state again. On the other hand, if the CPU 10 executes the standby command, it is possible to shift to the standby mode. Which state it shifts to depends on the contents of the program executed by the CPU 10.

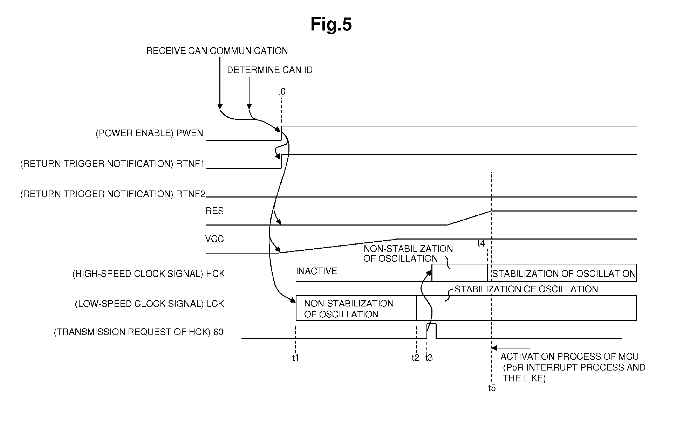

Fig. 5 shows an example of an operation timing chart in a case of initiating oscillation of the high-speed clock signal during the power-on reset time period.

In the deep standby state, the CAN control module 5 receives a communication from the network bus 6, detects that the received communication has a self-addressed ID, then activates the power-on enable signal PWEN signal at the time t0, and activates the trigger signal RTNF1. Thereby, the data processor 1 is supplied with the power supply voltage VCC again, and the reset control circuit 33 maintains the internal reset signal res at the low level, thereby initializing the internal portion of the data processor 1. As part of the initialization, the oscillation of the oscillation circuit 24 is initiated (time t1), and the oscillation is stabilized at a relatively early timing in the reset time period (time t2). In the period, the reset control circuit 33 recognizes that the power-on trigger is the specific trigger through the activation of the trigger signal RTNF1, activates the control signal 60 in synchronization with the timing at which the LVD 34 detects that the power supply voltage reaches the operation guarantee voltage, thereby instructing the oscillation circuit 13 to initiate oscillation (time t3). Here, the clock signal HCK, which is output from the oscillation circuit 13, is stabilized at the time t4. The CAN control module 5 initiates the timer operation of the timer circuit 53 from the power-on enable timing (time t0), and causes the time-out around the timing of oscillation stabilization of the clock signal HCK, thereby canceling the reset instruction at the time t5. The data processor 1, for which the reset instruction is canceled, performs the process of switching the system clock signal SCK from the low-speed clock signal LCK to the high-speed clock signal HCK first, receives the communication request from the CAN control module 5, and is then able to perform the process, which responds to the communication request in synchronization with the system clock signal SCK, in synchronization with the high-speed clock signal HCK. After the power-on reset instruction is canceled, it is possible to reduce the latency time of the oscillation stabilization as compared with the case of instructing the oscillation circuit 13 to initiate the oscillation, and it is possible to increase the speed of the response to the communication request. Furthermore, the deep standby state of the data processor 1 is canceled only if necessary. This contributes to low power consumption of the electronic control unit, and thus it is possible to reduce the time until the deep standby state is canceled and the response to the request from the CAN control module is made. Therefore, it is possible to reduce the accumulated operation time of the data processor. In other words, the accumulated amount of power consumed by the electronic control unit is further reduced.

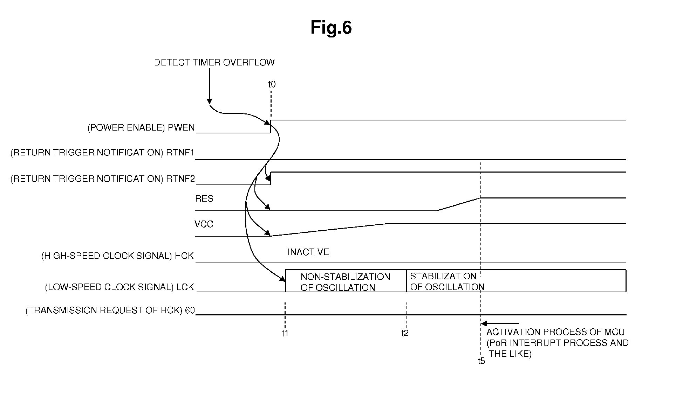

Fig. 6 shows an example of the operation timing chart in a case where the oscillation of the high-speed clock signal is not performed during the power-on reset time period.

In the deep standby state, the timer circuit 53 of the CAN control module 5 causes, for example, the time-out for obtaining the timing and the like of the operation for periodically clearing the timer count values of the timers provided in the actuators 2 and 3. In this case, as described above, the CAN control module 5 activates the power-on enable signal PWEN signal (time t0), but activates the trigger signal RTNF2 in accordance with the power-on trigger (trigger to cancel the deep standby). Thereby, the data processor 1 is supplied with the power supply voltage VCC again, and the reset control circuit 33 maintains the internal reset signal res at the low level, thereby initializing the internal portion of the data processor 1. As part of initialization, the oscillation of the oscillation circuit 24 is initiated (time t1), and the oscillation is stabilized at a relatively early timing in the reset time period (time t2). In the period, the reset control circuit 33 recognizes that the power-on trigger is the specific trigger through the activation of the trigger signal RTNF2, does not activate the control signal 60 even when the LVD 34 detects that the power supply voltage reaches the operation guarantee voltage, and does not instruct the oscillation circuit 13 to initiate oscillation. The CAN control module 5 initiates the timer operation of the timer circuit 53 from the power-on enable timing (time t0), and causes the time-out around the timing of oscillation stabilization of the clock signal HCK, thereby canceling the reset instruction at the time t5. In this case, the system clock signal SCK is still the clock signal LCK. Hence, the data processor 1, for which the reset instruction is canceled, performs the predetermined program in synchronization with the clock signal LCK, receives the access request to clear the timer count registers of the timers provided in the actuators 2 and 3 from the CAN control module 5, and then the CPU 10 performs the data processing responding to the access request in synchronization with the low-speed clock signal LCK. The data processing is a simple clear process for the registers. Hence, for the process, the high-speed process is not requested, and the process synchronized with the low-speed clock signal LCK is sufficient. In case that the process is performed in synchronization with the high-speed clock signal HCK, electric power unnecessary for performance is wasted on the activation of the oscillation circuit 13.

As described above, by adopting the control to issue the oscillation instruction of the high-speed clock signal only if necessary in response to the trigger to cancel the deep standby mode, it is possible to further contribute to low power consumption of the electronic control unit.

### «Low Power Consumption in Cancellation of Standby Mode»

Now, the low power consumption in the cancellation of the standby mode will be described. Although the power-on reset performed on the data processor is essential to cancel the deep standby mode, some circuits such as a low power consumption control circuit 30 in the data processor in the standby state are supplied with the power supply voltage in a limited way, and the oscillation of the low-speed clock signal is maintained. In case that the data processor 1 performs time management by using the clock timer circuit 27, the shift to the deep standby mode is not made, and low power consumption is achieved only by using the standby mode. Further, not only in the operation state of the data processor 1 but also in the standby state, it is preferable to continue the timer operation of the watchdog timer 29 in order to prevent the system from going out of control. Even in the standby mode, in some cases, it is necessary to communicate data to a different electronic control unit on the network bus 6 through the CAN control module 5. In consideration of such cases, a configuration, in which reduction in power consumption in the case of cancelling the standby mode is considered, will be described as follows.

The interrupt request signals exemplified in Fig. 2 are, for example, a wake-up interrupt request signal CANwku, an internal interrupt request signal INTj, an external interrupt request signal EXTint, an intermittent timer clear timing interrupt request signal WDTint, and a seconds-count update interrupt request signal RTTint. The wake-up interrupt request signal CANwku is an interrupt request signal that is activated in case that it is detected that the communication data is sent to a communication line CANBUS in the standby state of the CAN communication circuit of the COMMIF. The internal interrupt request signal INTj is an interrupt request signal from an internal circuit such as an AD-conversion circuit or a separate timer channel of the timer circuit. The external interrupt request signal EXTint is an interrupt request signal provided from the external of the data processor 1. The clear interrupt request signal WDTint is an interrupt request signal for requesting an operation to clear the timer count value of the watchdog timer 29 to an initial value. The seconds-count update interrupt request signal RTTint is an interrupt request signal for requesting a process of updating the seconds-count of the clock timer circuit. The clear interrupt request signal WDTint and the seconds-count update interrupt request signal RTTint are defined as a time-out interrupt request signal from the unique timer channel allocated for the timer circuit 25. Here, in order to clarify description, the interrupt signals CANwku, INTj, and EXTintg have a first interrupt priority level, the interrupt request signals WDTint and RTTint have a second interrupt priority level, and the first interrupt priority level is set to have higher interrupt priority than the second interrupt priority level.

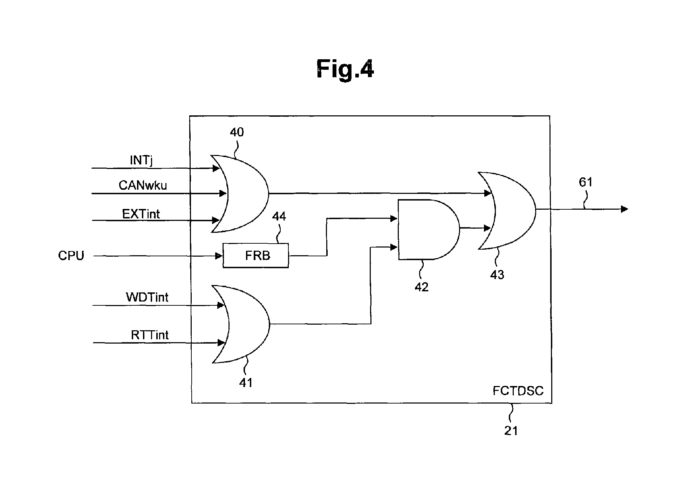

As described in detail in Fig. 4, the interrupt trigger determination circuit 21 receives the interrupt signals CANwku, INTj, and EXTintg of the interrupt triggers of the crystal oscillator and the like, for which the operation at the high-speed clock is necessary, through a logical OR gate 40 after the return from the standby operation, and also receives the interrupt request signals WDTint and RTTint of the interrupt triggers to continue the operation at the low-speed clock even after the return from the standby operation, through the logical OR gate 41. The high level output of the logical OR gate 40 indicates an interrupt request signal in which the interrupt request received by the interrupt control circuit 20 has the first interrupt level, and the signal is output as a discrimination signal 61 through the logical OR gate 43. The logical product between the output of the logical OR gate 41 and a value of a specific bit 44 of the register is obtained by the logical AND gate 42, the high level output of the logical AND gate 42 is regarded to be equivalent to the high level output of the logical OR gate 40 in case that the specific bit 44 is at the high level, and the result thereof is output as the discrimination signal 61 from the logical OR gate 43. The discrimination signal 61 with the high level instructs the oscillation stabilization latency timer 26 to initiate the timer count operation and instructs the oscillation circuit 13 to initiate oscillation at the time of returning from the standby mode. The instruction to causes the oscillation circuit 13 to initiate the oscillation is generated as a signal of the OR logical operation with the control signal 60 by the logical OR gate 35. The timer count value (time-out count value), at which the oscillation stabilization latency timer 26 is timed out, is set in the time-out count register 36 by, for example, the CPU 10. In case that the oscillation stabilization latency timer 26 is timed out, for example, the time-out interrupt request of the oscillation stabilization latency timer as one of the interrupt request signal INTj is supplied to the interrupt control circuit 20, and the CPU 10 executes the interrupt process responding to the interrupt request, thereby performing control to cause the clock switching circuit 22 to switch the system clock signal SCK from the low-speed clock signal LCK to the high-speed clock signal HCK. With such a configuration, the CPU 10 is able to perform the AD-conversion operation or the communication operation responding to the corresponding interrupt request in synchronization with the high-speed clock signal HCK.

If the interrupt request signal received in the interrupt control circuit 20 is the clear interrupt request signal WDTint or the seconds-count update interrupt request signal RTTint, the discrimination signal 61 is kept inactive, the oscillation of the high-speed clock signal HCK is not initiated, and the CPU 10 performs the seconds-update process or the timer clear process responding to the corresponding interrupt request in synchronization with the low-speed clock signal LCK. For the seconds-update process and the timer clear process periodically performed, the high-speed process is not requested, and the process synchronized with the low-speed clock signal LCK is sufficient, compared with the AD-conversion process or communication with the external for which the high-speed clock is necessary and which has high accuracy. In case that the process is performed in synchronization with the high-speed clock signal HCK, electric power unnecessary for performance is wasted on the activation of the oscillation circuit 13.

In addition, in Fig. 4, 44 is a flag register bit (FRB) which is selectively set by the CPU 10. By setting the flag register bit to the logical value 1, even when the clear interrupt request signal WDTint or the seconds-count update interrupt request signal RTTint is received, the signal 61 can be activated through the logical AND gate 42. Thereby, even when the processes for which the operation with the high-speed clock is necessary are performed although infrequently performed, it is possible to reduce the unnecessary time for waiting for the oscillation stabilization.

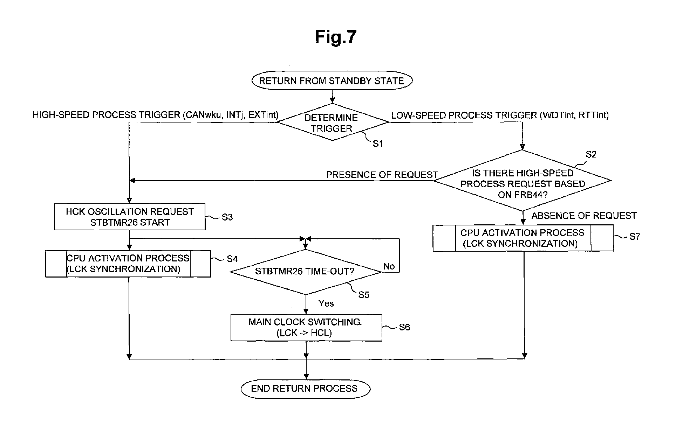

Fig. 7 shows a control sequence of returning from the standby mode as a whole. In case that the instruction to return from the standby state is issued by the interrupt request, the trigger determination circuit 21 determines whether the interrupt request at that time is the high-speed process trigger based on the interrupt request signal CANwku, INTj, or EXTint, or whether the request is the low-speed process trigger based on the interrupt request signal WDTint or TRRint (S1). In case that the interrupt request of the high-speed process trigger is received, the instructions to initiate the oscillation of the oscillation circuit 13 and the timer counter operation of the oscillation stabilization latency timer 26 are issued (S3). If the determination result of step S1 is the low-speed trigger, in case that the high-speed process request issued by the flag register bit (FRB) 44 is set, likewise, the process advances to step S3.

In case that the interrupt request at that time is received, the standby mode flag 32 of the system controller 23 is reset, and the operation of the first circuit such as the CPU 10 is allowed, thereby enabling the CPU 10 to execute the interrupt process responding to the corresponding interrupt request in synchronization with the low-speed clock signal LCK (S4). In this period, in case that the timer count operation of the oscillation stabilization latency timer 26 proceeds (S5) and the oscillation stabilization latency timer 26 is timed out, the clock switching circuit 22 switches the system clock signal SCK from the low-speed clock signal LCK to the high-speed clock signal HCK through the program process of the CPU 10 (S6). Thereby, the CPU returns from the standby state to a state where the interrupt process is executable in synchronization with the high-speed clock signal HCK.

In contrast, in step S2, if the interrupt request at that time is processed as the low-speed process trigger, the instruction of the oscillation of the high-speed clock signal HCK is not issued, and the interrupt process is executed in synchronization with the low-speed clock signal LCK.

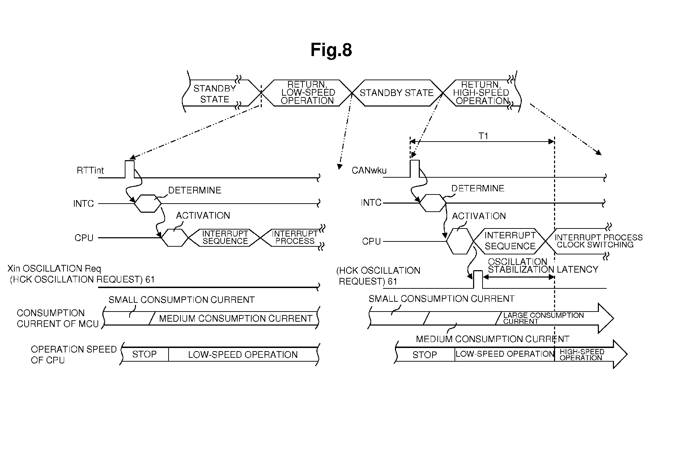

Fig. 8 shows an example of operation timing in a case where the CPU 10 returns from the standby state and performs the low-speed operation and operation timing in a case where the CPU 10 returns from the standby state and performs the high-speed operation.

In case that there is the interrupt request signal TRRint of the low-speed process trigger in the standby state, the instruction of the oscillation of the high-speed clock signal HCK is not issued. In case that the CPU 10 is activated, the operation speed is set as a low-speed operation synchronized with the low-speed clock signal LCK, and the current consumed by the data processor 1 is extremely small, compared with the case of the operation based on the high-speed clock. The interrupt sequence shown in the drawing represents vector fetching and evacuation processes.

In case that there is the interrupt request signal CANwku of the high-speed process trigger in the standby state, the instructions of the oscillation of the high-speed clock signal HCK and the timer count operation of the oscillation stabilization latency timer 26 are issued by the discrimination signal 61. In case that the CPU 10 is activated, first the operation speed is set as a low-speed operation synchronized with the low-speed clock signal LCK, and the interrupt sequence is initiated through the low-speed operation. In this period, the oscillation circuit 13 operates to be stabilized, in response to the time-out of the oscillation stabilization latency timer 26, the system clock signal SCK is switched from the low-speed clock signal LCK to the high-speed clock signal HCK, and thereafter the CPU 10 is able to perform the high-speed operation in synchronization with the high-speed clock signal HCK. By switching from a state where the current consumed by the data processor 1 is small to a medium state, the consumption current increases in accordance with the initiation of the oscillation of the oscillation circuit 13. As clearly shown in the drawings, the oscillation of the oscillation circuit 13 is initiated in conjunction with the activation of the CPU 10. Therefore, since there is a decrease in the latency time after the interrupt request signal CANwku of the high-speed process trigger is activated until the oscillation is stabilized, the latency time until the CPU 10 returns from the standby state and is able to perform the high-speed operation is T1.

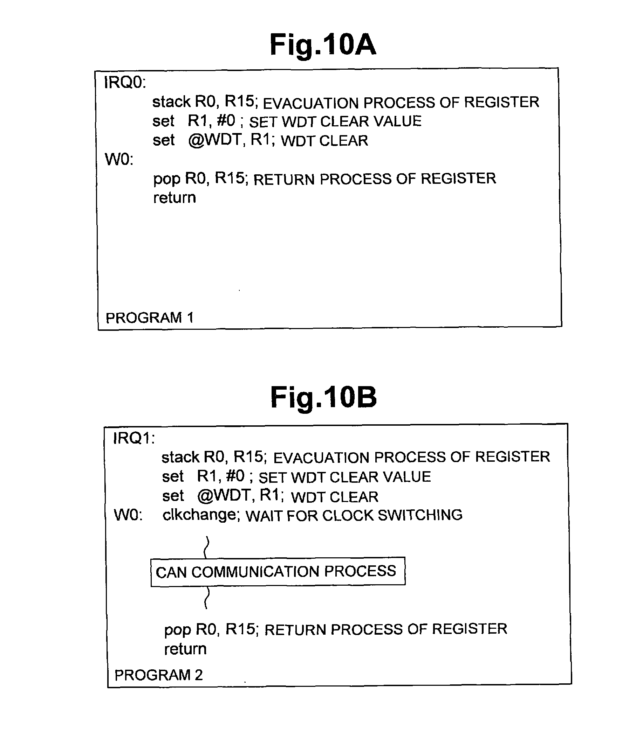

An example of the interrupt process program in the case where the CPU 10 performs the low-speed operation is shown as the program 1 of Fig. 10A, and an example of the interrupt process program in the case of performing the high-speed operation is shown as the program 2 of Fig. 10B.

The range from the label IRQ0/IRQ1 to the label W0 of each program example is a common process, and thus the command is executed in synchronization with the low-speed clock signal LCK. Thereby, even in the interrupt process program for the trigger for which it is necessary to perform the high-speed process, the process is executed in synchronization with the low-speed clock signal LCK even during the time until the oscillation of the high-speed clock signal HCK, of which the oscillation is already initiated before the CPU receives the interrupt notification, is stabilized.

In the program 1, after the label W0, the system clock signal SCK is still the low-speed clock signal LCK, and thus execution of the interrupt process program is terminated by execution of the return command.

At the label W0 of the program 2, by executing the clk change command, the system clock signal SCK is switched from the low-speed clock signal LCK to the high-speed clock signal HCK. The CAN communication process thereafter is performed in synchronization with the high-speed clock signal HCK. Here, the system clock signal SCK is switched by the clk change command. This configuration has the following objects: one object is to prevent the entire data processor 1 from being unstable by entirely changing the system clock signal at an unexpected timing in case that the configuration is made such that the system clock signal is automatically entirely changed in response to stabilization of the oscillation of the high-speed clock signal; and the other object is to fix the time for executing the process after waiting for stabilization of the oscillation in case that the oscillation of the high-speed clock signal HCK is not yet stabilized at the time point of execution of the corresponding command.

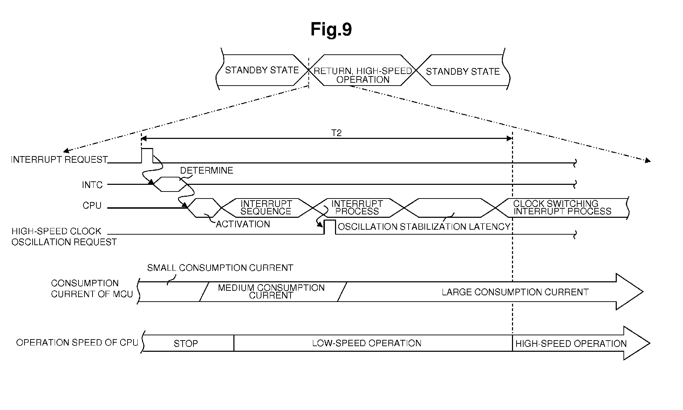

Fig. 9 shows an example of operation timing according to a comparative example in which the instruction to generate the oscillation of the high-speed clock is issued by the interrupt without using the trigger determination circuit 21 in case that the CPU 10 returns from the standby state and performs the high-speed operation.

Even when there is the interrupt request for which the high-speed process like the CAN wake-up is necessary in the standby state, similarly to the case where there is the interrupt request for which the low-speed process is sufficient, the CPU is activated by the interrupt, and the CPU initiates the interrupt sequence in synchronization with the low-speed clock signal. In case that the interrupt sequence is completed, on the basis of the vector obtained in accordance therewith, the interrupt process is activated, and first the high-speed clock oscillation circuit is instructed to initiate the oscillation in case that the high-speed clock synchronization operation is necessary in accordance with the interrupt process program. Thereafter, stabilization of the oscillation of the high-speed clock signal is awaited, the stabilization is made, then the system clock signal is switched from the low-speed clock signal to the high-speed clock signal, and the interrupt process is continued in synchronization with the corresponding high-speed clock signal. As clearly shown in the drawing, the activation of the CPU 10, the interrupt sequence, the oscillation of the high-speed clock instruction, the oscillation stabilization, and the clock switching are performed in series. Therefore, the latency time from the interrupt request of the high-speed process trigger to the oscillation stabilization increases. Thus the latency time T2 until the CPU returns from the standby state and is able to perform high-speed operation becomes longer than the latency time T1 of Fig. 8.

As clearly seen in case of comparing the time period T1 of Fig. 8 with the time period T2 of Fig. 9, in both the time period during which the consumption current is medium and the time period during which the consumption current is large, the former T1 is set to be smaller than the latter T2. Consequently, in the operation that periodically repeats the high-speed clock synchronization operation based on the standby state and the standby cancellation, the average consumption current or the accumulated consumption current is reduced by employing the control of the standby cancellation at the timing shown in Fig. 8.

The invention proposed by the present inventors has been hitherto described in detail on the basis of the embodiments. However, it is needless to say that the present invention is not limited thereto, and may be modified into various forms without departing from the technical scope thereof.

The low power consumption mode is not limited to the above description. The circuits, which are inactive in the low power consumption mode, are not limited to the case where the supply of the power supply voltage is stopped, but the supply of the clock signal may be stopped. Further, instead of stopping of the supply of the power supply voltage, the supply of the clock signal may be stopped.

Further, the synchronization clock signal of the data processor is not limited to the two clock signals such as HCK and LCK. In a case where there is a separate clock signal HCK with an oscillation frequency between HCK and LCK, in case that the transmission operations of LCK and MCK are stopped in the standby mode, LCK and MCK are set as the second clock signals. Further, in case that the transmission operation of LCK is stopped in the standby mode, LCK is set as the second clock signal, and MCK and HCK are set as the first clock signals. The first clock signal may be used as a frequency-divided multi-layer clock signal.

The type of the circuit module provided in the data processor, the internal bus configuration of the data processor, and the like may be appropriately changed. Further, the data processor is appropriate for a multi-CPU, and may have various kinds of accelerators, and the use applications thereof are not limited to this.

Furthermore, the switching control of the clock switching circuit for switching the system clock signal from the low-speed clock signal to the high-speed clock signal is not limited to the case of using the interrupt. For example, by directly supplying the time-out signal of the oscillation stabilization latency timer to the switching circuit, it may be used in the switching.

It is not necessary for both the function of reducing power consumption in the case of returning from the deep standby mode and the function of reducing power consumption in the case of returning from the standby mode to be present, and either one of the functions may be provided. Further, in the electronic control unit which does not use the deep standby mode, the return trigger signal, which is output by the CAN control module, is used as the external interrupt signal indicating the trigger to return from the standby mode.

Further, the network connected with the electronic control unit is not limited to the CAN, and may be the LIN (Local Interconnect Network) or the like, and the network is not restricted to the communication protocol of the on-vehicle LAN.

The data processor and the electronic control unit of the present invention are not limited to the application for vehicle, and may be applied to various kinds of controls of home applications and industrial applications.

### INDUSTRIAL APPLICABILITY

The present invention can be broadly applied to available techniques in consideration of low power consumption in the case of clock oscillation of the data processor and the electronic control unit using the data processor. For example, the invention can be applied to electronic control units of vehicles such as an automobile.

## Claims

1. A data processor comprising:
a first oscillation circuit that generates a first clock signal and stops oscillation in a low power consumption mode;
a second oscillation circuit that generates a second clock signal with an oscillation frequency lower than the first clock signal and does not stop oscillation in the low power consumption mode;
a clock switching circuit that selects and outputs the first clock signal or the second clock signal;
a first circuit that stops operating in response to setting of the low power consumption mode, restarts operating in response to cancellation of the low power consumption mode, and operates in synchronization with a clock signal which is output from the clock switching circuit; and
a second circuit that is able to operate in both states of the setting and the cancellation of the low power consumption mode,
wherein a CPU is provided as one of the first circuit,
wherein a low power consumption mode control circuit is provided as one of the second circuit, and
wherein the low power consumption mode control circuit cancels the low power consumption mode in response to receiving an interrupt request in the low power consumption mode, and instructs the first oscillation circuit to initiate the oscillation without an interrupt process of the CPU which responds to the corresponding interrupt request particularly in case that the interrupt request to cancel the low power consumption mode is a predetermined interrupt request.

2. The data processor according to claim 1,
wherein the low power consumption mode control circuit has an interrupt control circuit and a trigger determination circuit,
wherein the interrupt control circuit issues an instruction of interrupt to the CPU in response to receiving the interrupt request, and issues an instruction to cancel a low power consumption state in response to receiving the interrupt request in the low power consumption state, and
wherein in case that it is determined that the interrupt request received by the interrupt control circuit is the predetermined interrupt request, the trigger determination circuit outputs a control signal for instructing the first oscillation circuit to initiate the oscillation.

3. The data processor according to claim 2, wherein the low power consumption mode control circuit further has a low power consumption mode flag for determining the setting and the cancellation of the low power consumption mode, the data processor achieves the low power consumption state in case that the low power consumption mode flag is set, and the low power consumption state of the data processor is canceled in case that the set low power consumption mode flag is reset.

4. The data processor according to claim 2,
wherein the low power consumption mode control circuit initiates a timer count operation in synchronization with the instruction of the oscillation of the first oscillation circuit, and further has a timer circuit that outputs a time-out signal in case that a time-out count value is reached, and
wherein an output of the clock switching circuit is controlled to be switched from the second clock signal to the first clock signal in response to the time-out signal.

5. The data processor according to claim 4, wherein the timer circuit has a time-out count register in which the time-out count value is set by the CPU.

6. The data processor according to claim 4,
wherein the interrupt control circuit inputs the time-out signal as one of the interrupt requests, and
wherein the CPU controls the output of the clock switching circuit so as to switch from the second clock signal to the first clock signal through the interrupt process which is initiated by inputting an interrupt instruction based on the time-out signal from the interrupt control circuit.

7. The data processor according to claim 1, further comprising a communication interface circuit that communicates with external as the first circuit,
wherein the predetermined interrupt request to cancel the low power consumption mode is a request to initiate communication using the communication interface circuit.

8. The data processor according to claim 7, further comprising an AD-conversion circuit that converts an analog signal, which is input from the external, into a digital signal as the first circuit,
wherein the predetermined interrupt request to cancel the low power consumption mode is a request to initiate an operation using the AD-conversion circuit.

9. The data processor according to claim 7, further comprising a watchdog timer circuit as the first circuit,
wherein an interrupt request other than the predetermined interrupt request to cancel the low power consumption mode is a request to initialize a timer count value of the watchdog timer circuit.

10. The data processor according to claim 7, further comprising a clock timer circuit as the first circuit,
wherein an interrupt request other than the predetermined interrupt request to cancel the low power consumption mode is a request to initialize a timer count value of the clock timer circuit.

11. The data processor according to claim 1, further comprising:
a trigger terminal that is supplied with a trigger signal which indicates a trigger of a power-on reset from the external of the data processor; and
a reset control circuit that serves as one of the second circuit and performs reset control of the data processor,
wherein the reset control circuit instructs the second oscillation circuit to initiate the oscillation during a time period of the power-on reset, and instructs the first oscillation circuit to initiate the oscillation at a predetermined timing on a condition that the trigger terminal state is a specific state.

12. The data processor according to claim 11, wherein the reset control circuit has a low voltage detector, and instructs the first oscillation circuit to initiate the oscillation in synchronization with timing at which the low voltage detector detects a rising edge at a predetermined level of a power supply voltage during the time period of the power-on reset, in case that the trigger terminal state is the specific state.

13. The data processor according to claim 12, wherein after cancellation of the power-on reset, an output of the clock switching circuit is controlled to be switched from the second clock signal to the first clock signal.

14. The data processor according to claim 13, further comprising an external reset terminal that issues an instruction to cancel the power-on reset.

15. A data processor comprising:
a first oscillation circuit that generates a first clock signal and stops oscillation in a low power consumption mode by using an oscillator;
a second oscillation circuit that generates a second clock signal with an oscillation frequency lower than the first clock signal by using a ring oscillator circuit and does not stop oscillation in the low power consumption mode;
a clock switching circuit that selects and outputs the first clock signal or the second clock signal;
a CPU that operates in synchronization with the clock signal which is output from the clock switching circuit;
a trigger terminal that serves as an external interface terminal which is supplied with a signal indicating a trigger of a power-on reset from external; and
a reset control circuit that performs reset control of the data processor,
wherein the reset control circuit instructs the second oscillation circuit to initiate the oscillation during a time period of the power-on reset, and instructs the first oscillation circuit to initiate the oscillation at a predetermined timing on a condition that the trigger terminal state is a specific state.

16. The data processor according to claim 15, wherein the reset control circuit has a low voltage detector, and instructs the first oscillation circuit to initiate the oscillation in synchronization with timing at which the low voltage detector detects a rising edge at a predetermined level of a power supply voltage during the time period of the power-on reset, in case that the trigger terminal state is the specific state.

17. The data processor according to claim 16, wherein after cancellation of the power-on reset, an output of the clock switching circuit is controlled to be switched from the second clock signal to the first clock signal.

18. The data processor according to claim 17, further comprising an external reset terminal that issues an instruction to cancel the power-on reset.

19. An electronic control unit comprising:
a control module that is connected to a communication network;
a data processor that is connected to the communication module, has a plurality of oscillation circuits individually generating a first clock signal and a second clock signal of which a frequency is lower than that of the first clock signal and with which it is easy to control oscillation stabilization, and has a CPU operating in synchronization with an oscillation output of the oscillation circuit which is selected by a clock switching circuit;
an actuator that is controlled by the data processor; and
a power supply circuit that supplies a power supply voltage to the data processor,
wherein the control module controls supply of the power supply voltage from the power supply circuit to the data processor and cutoff of the power supply voltage, and performs control to output a signal, which indicates a trigger thereof, to the data processor in case of switching from the state where the power supply voltage is cut off to the state where the voltage is supplied, and
wherein the data processor initiates oscillation of the second clock signal during a time period of the power-on reset, and initiates the oscillation of the first clock signal at a predetermined timing on a condition that the trigger supplied from the control module is a predetermined trigger.

20. The electronic control unit according to claim 19, wherein the data processor has a low voltage detector, and initiates the oscillation of the first clock signal in synchronization with timing at which the low voltage detector detects a rising edge at a predetermined level of a power supply voltage during the time period of the power-on reset, in case that the trigger supplied from the control module is the predetermined trigger during the time period of the power-on reset.

21. The electronic control unit according to claim 20, wherein after cancellation of the power-on reset, an output of the clock switching circuit is controlled to be switched from the second clock signal to the first clock signal.

22. The electronic control unit according to claim 21, wherein the control module instructs the data processor to cancel the power-on reset.

23. The electronic control unit according to claim 22, wherein the control module further has a timer circuit for determining cancellation timing of the power-on reset.

24. The electronic control unit according to claim 19,
wherein the data processor has
a first circuit that stops operating in response to setting of the low power consumption mode, restarts operating in response to cancellation of the low power consumption mode, and operates in synchronization with a clock signal which is output from the clock switching circuit, and
a second circuit that is able to operate in both states of the setting and the cancellation of the low power consumption mode,
wherein the CPU is one circuit of the first circuit,
wherein a low power consumption mode control circuit is provided as one of the second circuit, and
wherein the low power consumption mode control circuit cancels the low power consumption mode in response to receiving an interrupt request in the low power consumption mode, and issues an instruction to initiate oscillation of the first clock signal without a CPU interrupt process which responds to the corresponding interrupt request particularly in case that the interrupt request to cancel the low power consumption mode is a predetermined interrupt request.

25. The electronic control unit according to claim 24,
wherein the low power consumption mode control circuit has an interrupt control circuit and a trigger determination circuit,
wherein the interrupt control circuit issues an interrupt instruction to the CPU in response to receiving the interrupt request, and issues an instruction to cancel a low power consumption state in response to receiving the interrupt request in the low power consumption state, and
wherein in case that it is determined that the interrupt request received by the interrupt control circuit is the predetermined interrupt request, the trigger determination circuit outputs a control signal for issuing the instruction to initiate the oscillation of the first clock signal.

26. The electronic control unit according to claim 25, wherein the low power consumption mode control circuit further has a low power consumption mode flag for determining the setting and the cancellation of the low power consumption mode, the data processor achieves the low power consumption state in case that the low power consumption mode flag is set, and the low power consumption state of the data processor is canceled in case that the set low power consumption mode flag is reset.

27. The electronic control unit according to claim 25,
wherein the low power consumption mode control circuit initiates a timer count operation in synchronization with the instruction to initiate the oscillation of the first clock signal, and further has a timer circuit that outputs a time-out signal in case that a time-out count value is reached, and
wherein an output of the clock switching circuit is controlled to be switched from the second clock signal to the first clock signal in response to the time-out signal.

28. The electronic control unit according to claim 27, wherein the timer circuit has a time-out count register in which the time-out count value is set by the CPU.

29. The electronic control unit according to claim 27,
wherein the interrupt control circuit inputs the time-out signal as one of the interrupt requests, and
wherein the CPU controls the output of the clock switching circuit so as to switch from the second clock signal to the first clock signal through the interrupt process which is initiated by inputting an interrupt instruction based on the time-out signal from the interrupt control circuit.
